# EUROPEAN PATENT APPLICATION

(11) **EP 3 133 420 A2**
(43) Date of publication of application: **22.02.2017**
(21) Application number: 16001788.5
(22) Date of filing: 11.08.2016
(51) Int. Cl.: G01S 17/93

(54) **OSCILLATING SENSORS AT LOADING DOCKS**

(30) Priority: 11.08.2015 US 201514823442
(71) Applicant: Rite-Hite Holding Corporation, Milwaukee, WI 53223 (US)
(72) Inventor: Stone, Bradley J., Port Washington, WI 53074 (US)
(74) Representative: Samson & Partner Patentanwälte mbB

(57) **Abstract**

Example sensor systems to detect a presence of a person at a loading dock are disclosed. An example sensor system includes a housing mountable to a support structure. An emitter is supported by the housing and is to emit a projection. An actuator is coupled to at least one of the housing or the emitter, where the actuator is movable between a first position and a second position relative to the support structure. The emitter is to emit the projection along a first path when the actuator is in the first position and the emitter is to emit the projection along a second path when the actuator is in the second position. A receiver is supported by the housing at a substantially fixed location relative to the emitter proximate the emitter. The receiver is to receive a reflection of the projection reflected off of the person positioned within a line of sight of the projection.

## Description

### Field of the Disclosure

The present disclosure relates generally to safety systems for use at a loading dock and, more specifically, to oscillating sensors at the loading dock.

### Background

Typical loading docks provide an area for trucks to back up next to an elevated platform of a building so that cargo can be readily transferred between the truck and the building. Some loading docks include equipment, such as dock levelers and/or vehicle restraints. Dock levelers provide an adjustable bridge between the platform and the truck bed. Vehicle restraints help prevent the truck from prematurely driving away from the platform.

To reduce the likelihood of a truck accidentally striking a person that might be in the area, some loading docks include vehicle and/or personnel sensors, such as those provided by BEA Industrial of Belgium and Pepperl & Fuchs of Germany. Although such sensors can be very effective and reliable, their use can be limited in certain applications.

### Brief Description of the Drawings

FIG. 1 is a schematic diagram of an example sensor system configured in accordance with the teachings disclosed herein.
FIG. 2 is a schematic diagram similar to FIG. 1 but showing another configuration of the example sensor system.
FIG. 3 is a schematic diagram similar to FIGS. 1 and 2 but showing another configuration of the example sensor system.
FIG. 4 is a schematic diagram similar to FIGS. 1 - 3 but showing yet another configuration of the example sensor system.
FIG. 5 is a schematic diagram of another example sensor system configured in accordance with the teachings disclosed herein.
FIG. 6 is a schematic diagram similar to FIG. 5 but showing another configuration of the example sensor system.
FIG. 7 is a schematic diagram similar to FIGS. 5 and 6 but showing another configuration of the example sensor system.
FIG. 8 is a schematic diagram similar to FIGS. 5 - 7 but showing yet another configuration of the example sensor system.
FIG. 9 is a schematic diagram of another example sensor system configured in accordance with the teachings disclosed herein.
FIG. 10 is a schematic diagram similar to FIG. 9 but showing another configuration of the example sensor system.
FIG. 11 is a schematic diagram of another example sensor system configured in accordance with the teachings disclosed herein.
FIG. 12 is a schematic diagram similar to FIG. 11 but showing another configuration of the example sensor system.
FIG. 13 is a schematic diagram of another example sensor system configured in accordance with the teachings disclosed herein.
FIG. 14 is a schematic diagram similar to FIG. 13 but showing another configuration of the example sensor system.
FIG. 15 is a schematic diagram of another example sensor system configured in accordance with the teachings disclosed herein.
FIG. 16 is a schematic diagram similar to FIG. 15 but showing another configuration of the example sensor system.

### Detailed Description

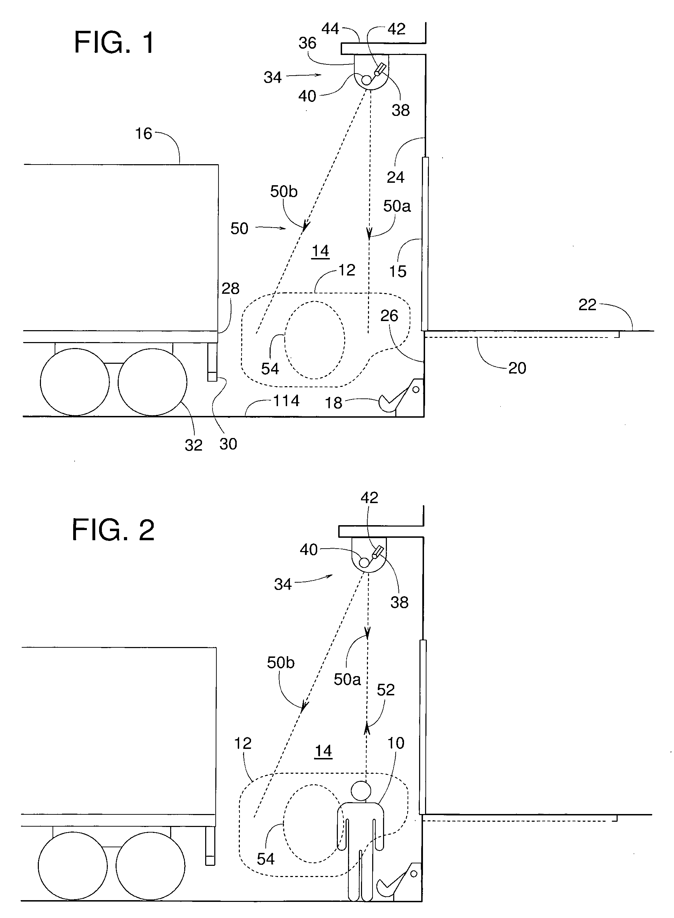

Example sensor systems disclosed herein are particularly useful for detecting a presence of a person at truck loading docks. Some example sensor systems disclosed herein include an oscillating laser emitter to scan a predefined area of a dock. In some examples, a motor rotates a beam deflector to direct or project a laser beam alternately between at least two target points. In some examples, a second actuator moves a housing and/or the emitter of the sensor to direct or project a laser beam at an intermediate point between the two target points, thereby eliminating a blind spot that might otherwise exist at the intermediate point, for example, between the two target points. FIGS. 1 - 16 show various example sensor systems to detect a person 10 within a predetermined area 12 of a loading dock 14. It should be noted that the drawing figures are schematic diagrams with certain parts being shown disproportionate in size to more clearly illustrate certain features. The term, "loading dock" refers to any area used for loading or unloading a vehicle's cargo. In response to detecting the person 10 in the area 12, some example sensor systems disclosed herein control visual and/or audible signals for alerting the driver of a vehicle 16. In addition or alternatively, some example sensor systems disclosed herein control an operation of a door 15 and/or control other dock-related equipment.

The term, "vehicle" refers to any wheeled device for transporting purposes. Examples of the vehicle 16 include, but are not limited to, a truck, a trailer, an open trailer bed, an enclosed trailer bed, a lorry, etc. The term, "person" refers to any individual such as a dock worker or a person that is standing, walking, and/or operating some type of material handling equipment, such as a forklift, pallet truck or dolly. For example, sensing a forklift driven by a person, for example, may be considered herein as being equivalent to sensing a person at the dock 14.

Some examples of the dock 14 include a vehicle restraint 18 and a dock leveler 20. To facilitate transferring cargo between the vehicle 16 and an indoor platform 22 of a building 24, the dock leveler 20 provides an adjustable bridge spanning a gap that might exist between a dock face 26 of the building 24 and a rear edge 28 of the vehicle 16. To help prevent the vehicle 16 from prematurely pulling away from the dock face 26 during loading and/or unloading operations, the vehicle restraint 18 selectively engages a vehicle's rear impact guard 30 (ICC bar), a tire 32 and/or some other portion of the vehicle 16.

In the example shown in FIGS. 1 - 4, a sensor system 34 includes a housing 36 containing an emitter 38, a deflector 40 and a receiver 42. The housing 36 is attached to a supporting structure 44. Examples of the supporting structure 44 include, but are not limited to, a bracket, a frame, a wall, a header of a dock seal or shelter, etc.

To scan for the person 10 and/or equivalent obstructions or equipment, the emitter 38 emits one or more projections 50 (e.g., a first projection 50a, a second projection 50b, an intermediate projection 50c, etc.) to cover at least a portion of the predetermined area 12. The term, "projection" refers to any focused energy emitted from a sensor system toward a target area, or energy collected from "background" energy emitted by an object, for the purpose of detecting the presence or movement of a person or equivalent obstruction within the target area. Examples of such sensor systems operate under various known principles, examples of which include, but are not limited to, active infrared, passive infrared, ultrasonic, radar, microwave, laser, electromagnetic induction, ultra-IR LED, time-of-flight pulse ranging technology, photoelectric eye, thermal, video analytics, and/or various combinations thereof. In some examples, the sensor systems disclosed herein employ laser systems with time-of-flight pulse ranging, where the monitored area includes objects or moving equipment that should be ignored by the sensor.

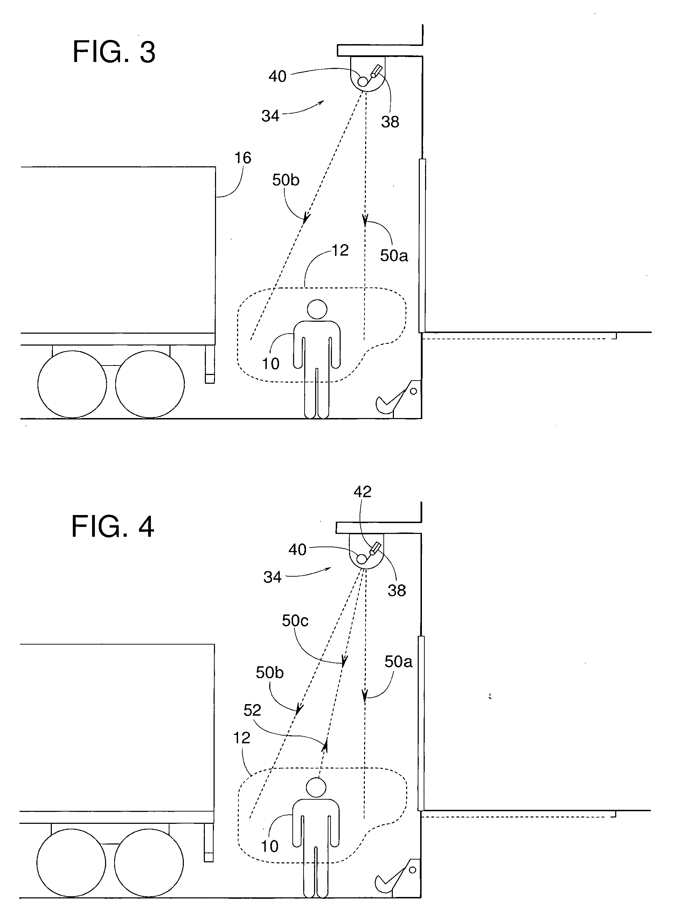

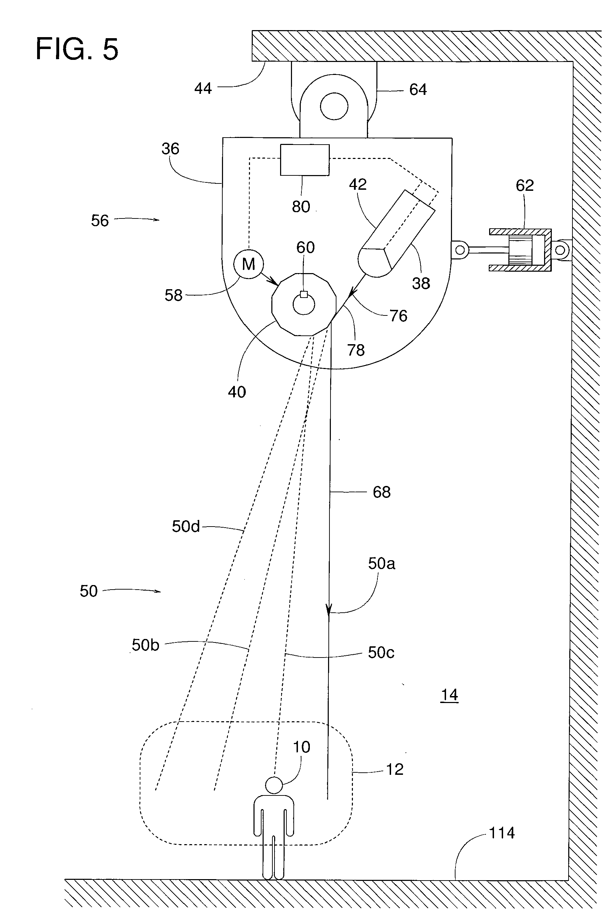

If the projection 50 reaches and/or is interrupted or intersected by the person 10, the receiver 42 receives a reflection 52 of the projection 50 projected off of the person 10 positioned within a path or a line of sight of the projection 50, as shown in FIG. 2. Based on the timing (e.g., a time difference between when the projection 50 is emitted by the emitter 38 and the reflection 52 is received by the receiver 42) and/or other characteristic of the reflection 52, the sensor system 34 determines whether the person 10 is within area 12. To prevent person 10 from being undetected in a blind spot 54 between projections 50a and 50b, as shown in FIG. 3, the sensor system 34 of the illustrated example emits an intermediate projection 50c, as shown in FIG. 4. Providing one or more intermediate projections 50c can be achieved in various ways, as illustrated in FIGS. 5 - 16.

In the example shown in FIGS. 5 - 8, a sensor system 56 (e.g., a BEA LZR-microscan) includes a housing 36, an emitter 38, a receiver 42, a beam deflector 40, and a motor 58. The motor 58 rotates or otherwise moves the beam deflector 40. The motor 58 is schematically illustrated to represent any type of drive unit, transmission and/or means for moving the beam deflector 40. In the illustrated example, the beam deflector 40 is in the form of a multifaceted mirror effectively fixed to a shaft 60 rotated by the motor 58. The term, "beam deflector" refers to a structure and/or any means for redirecting a direction of a projection. The beam deflector 40 is schematically illustrated to represent any type of beam deflector, examples of which include, but are not limited to, a rotating mirror, a pivotal mirror, a movable lens, etc.

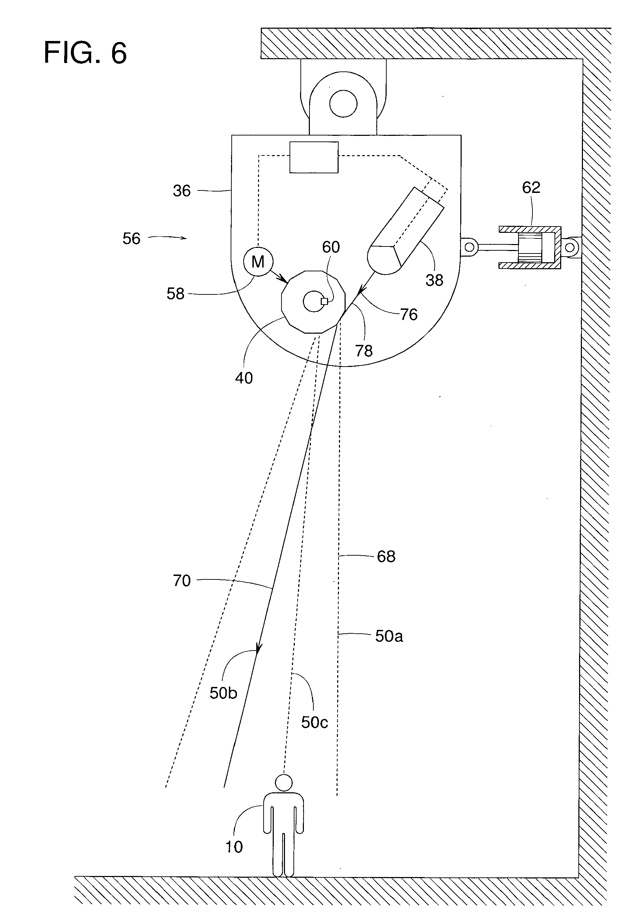

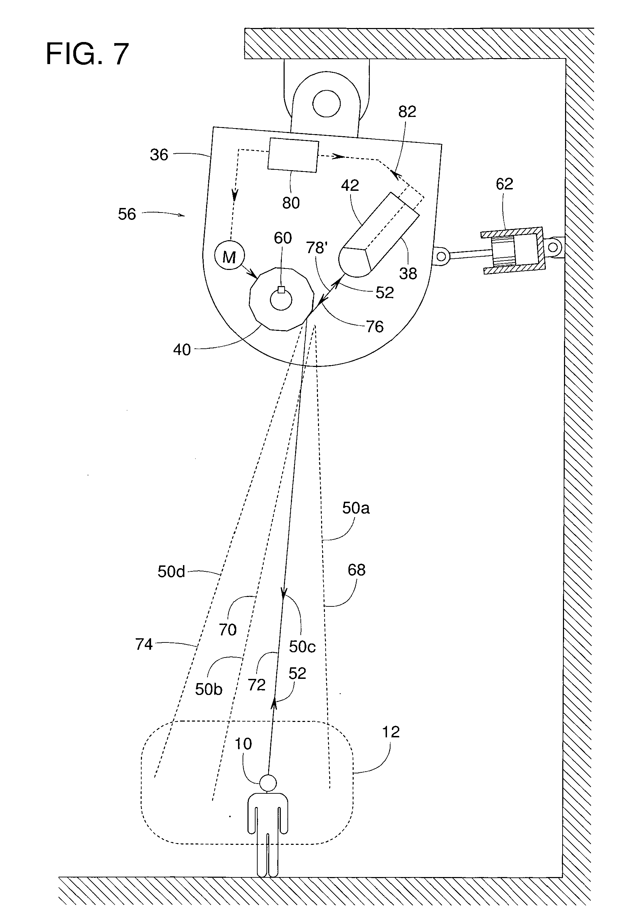

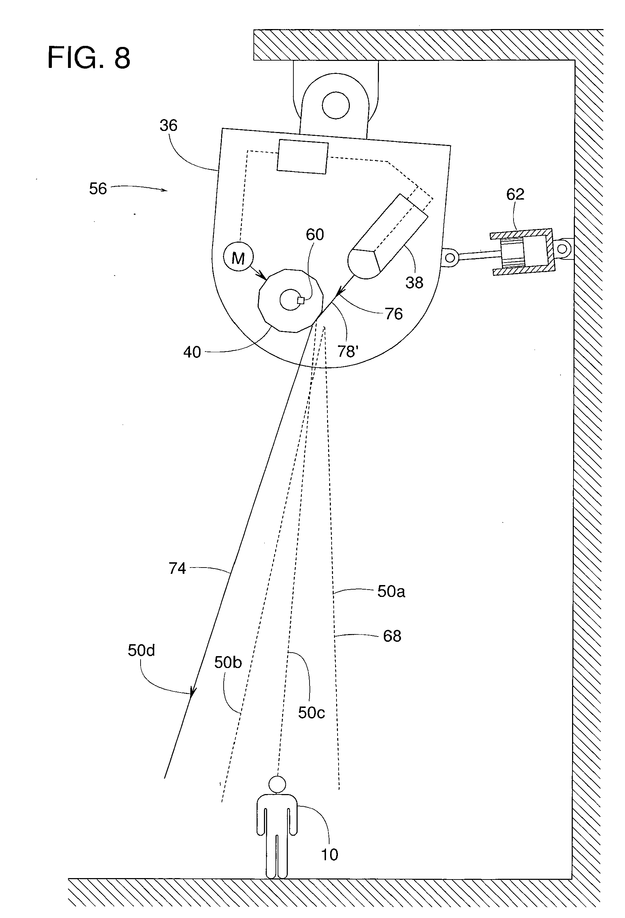

To create or provide at least one intermediate projection 50c (and/or an optional projection 50d), the sensor system 36 of the illustrated example includes an actuator 62 coupled to the housing 36 and/or to the emitter 38. In this example, a pivotal connection 64 with a support structure 44 (or an alternate translating connection 66 with the support structure 44) enables the actuator 62 to move the housing 36 and/or the emitter 38 between a first position (FIGS. 5 and 6) and a second position (FIGS. 7 and 8). When the housing 36 and/or the emitter 38 are in the first position (FIGS. 5 and 6), the movement of the beam deflector 40 produces in alternation the first projection 50a along a first path 68 (FIG. 5) and/or the second projection 50b along a second path 70 (FIG. 6). In the illustrated example, the first path 68 is different than the second path 70. In some examples, at least a portion of the first path 68 may overlap at least a portion of the second path 70. In some examples, the first path 68 does not intersect the second path 70. When the housing 36 and/or the emitter 38 are in the second position (FIGS. 7 and 8), the movement of the beam deflector 40 produces in alternation the intermediate projection 50c along an intermediate path 72 (FIG. 7) and /or the projection 50d along another path 74 (FIG. 8). In the illustrated example, the third path 72 is different than the fourth path 74. In some examples, at least a portion of the third path 72 may overlap at least a portion of the fourth path 74. In some examples, the third path 72 does not intersect the fourth path 74. In some examples, the first path 68 and/or the second path 70 do not intersect the third path 72 and/or the fourth path 74. In some examples, the actuator 62 moves the housing 36 and/or the emitter 38 in a smooth sweeping motion for generally continuous scanning between the first position (FIGS. 5 and 6) and the second position (FIGS. 7 and 8).

The actuator 62 is schematically illustrated to represent a device to rotate, tilt or otherwise move the housing 36 and/or the emitter 38 and/or any means for rotating, tilting or otherwise moving the housing 36 and/or the emitter 38. Examples of the actuator 62 include, but are not limited to, a linear motor, a rotating motor, a solenoid, a fluid cylinder, etc. In the example of a rotating motor, a crank arm and/or cam may be used to convert a rotational motion of the motor to a linear motion. In some examples, a range of motion of the emitter 38 and/or the housing 36 may be sufficient to cover or monitor an area greater than (e.g., an area covering the greatest blind spot) would otherwise exist if the housing 36 and/or the emitter 38 remained stationary.

FIGS. 5, 6, 7 and 8 illustrate an example sequence of operation. In FIG. 5, the actuator 62 is at a first position (e.g., an initial position), and the beam deflector 40 is at a first or initial orientation (e.g., note a position of the key 60). In this configuration, the emitter 38 emits a projection 76 (e.g., a light or beam) along an initial path 78, and the beam deflector 40 redirects the projection 76 as the first projection 50a along the first path 68. In some instances, the first projection 50a may not detect the presence of (e.g., may not reflect and/or engage) the person 10 in the area 12.

In FIG. 6, the actuator 62 is at the first position, and the beam deflector 40 is at a second orientation (e.g., note a change in the position of the key 60). In this configuration, the emitter 38 emits the projection 76 along the initial path 78, and the beam deflector 40 redirects the projection 76 as the second projection 50b along the second path 70. In the illustrated example, the first and second projections 50a and 50b do not detect the presence of (e.g., both miss and/or do not engage) the person 10 because the person 10 is standing within a blind spot or area between an area in which the first and second paths 68 and 70 of the respective first and second projections 50a and 50b project or cover.

In FIG. 7, the actuator 62 is at the second position, and the beam deflector 40 is the first orientation (e.g., note the position of the key 60). In this configuration, the emitter 38 emits the projection 76 along a different initial path 78', and the beam deflector 40 redirects the projection 76 as the intermediate projection 50c along the intermediate path 72 between the paths 68 and 70. In the illustrated example, the person 10 is positioned in the path or line sight of the intermediate projection 50c, which reflects off of the person 10 and returns toward the sensor system 56 as the reflection 52. The receiver 42 receives the reflection 52. In this example, a controller 80 is responsive to a feedback signal 82 from the receiver 42. In some examples, the controller 80 compares (e.g., using a time-of-flight principle) a time difference between when the projection 50c was emitted by the emitter 38 and the reflection 52 was received by the receiver 42 to determine whether the person 10 is within the predetermined range 12 of the sensor system 56.

In FIG. 8, the actuator 62 is at the second position, and the beam deflector 40 is at the second orientation. In this configuration, the emitter 38 emits the projection 76 along the initial path 78' (same as in FIG. 7), but the beam deflector 40 redirects the projection 76 as the intermediate projection 50d along path 74. In the illustrated example, the intermediate projection 50d does not detect the presence of (e.g., misses and/or is not engaged by) the person 10. As the beam deflector 40 cycles through multiple configurations (e.g., at least two configurations) and the actuator 62 cycles through multiple positions (e.g., at least two positions), at least one projection (e.g., the projection 50c) detects the presence of the person 10 within the area 12.

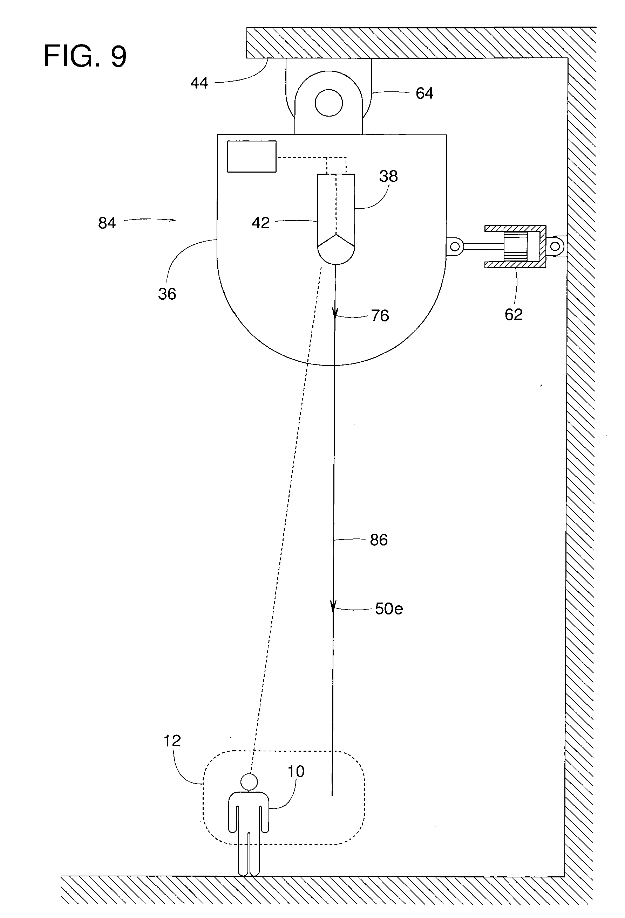

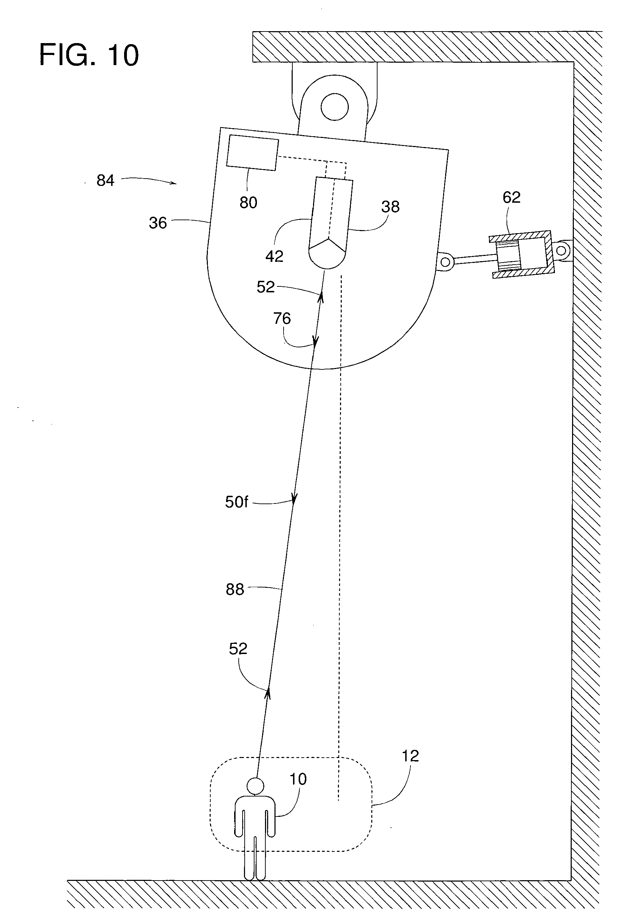

FIGS. 9 and 10 show an example sensor system 84 that is similar to sensor system 36 of FIGS. 5 - 8. However, the sensor system 84 functions without the beam deflector 40. In this example, the initial projection 76 remains substantially fixed relative to the housing 36, but the actuator 62 still moves the housing 36 and/or the emitter 38 between the first position (FIG. 9) and the second position (FIG. 10) relative to the supporting structure 44. In the illustrated example, the emitter 38 emits a projection 50e along a first path 86 when actuator 62 is at the first position (FIG. 9). In this example, the projection 50e does not detect the presence (e.g., misses or is not intersected by) the person 10. In addition, the emitter 38 emits a projection 50f along a second path 88 when actuator 62 moves to the second position (FIG. 10). In this example, the projection 50f detects the presence (e.g., is intersected by) the person 10. In turn, the intersection of the projection 50f by the person 10 creates a reflection 52 off of the person 10, as shown in FIG. 10. Based on the timing (e.g., a time difference between when the projection 50f is emitted by the emitter 38 and the reflection 52 is received by the receiver 42) and/or other characteristic of the reflection 52, the controller 80 determines whether the person 10 is within the area 12.

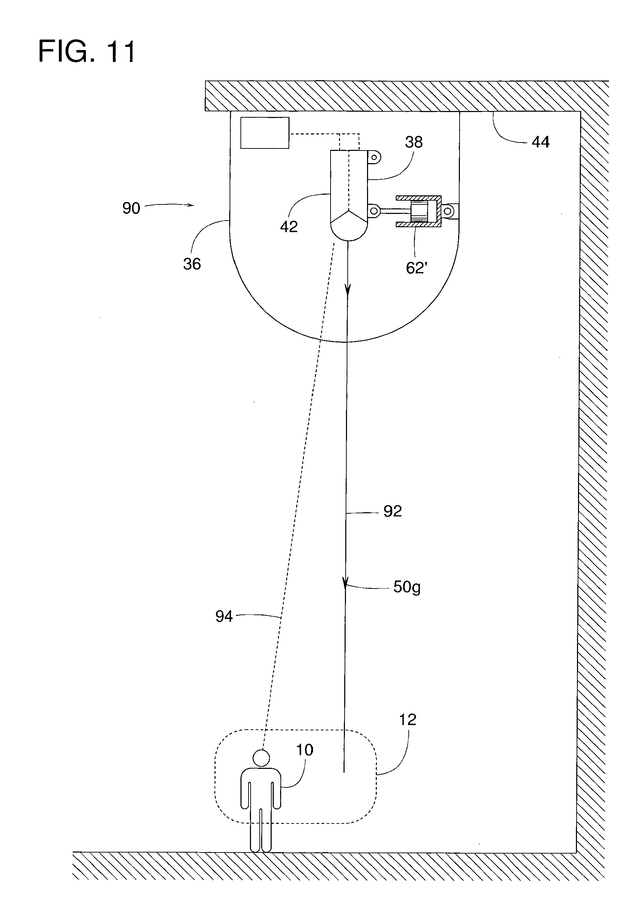

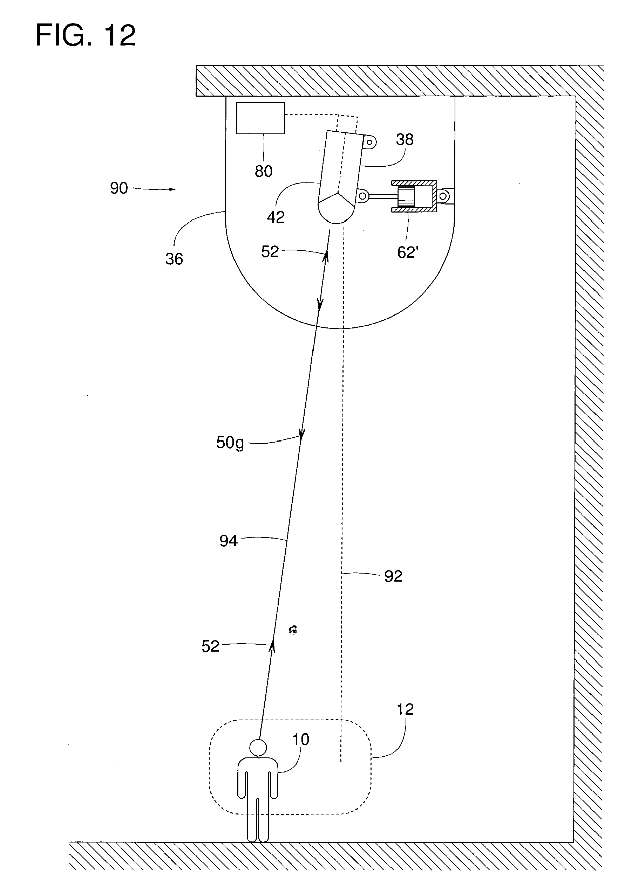

FIGS. 11 and 12 show an example sensor system 90 that is similar to sensor system 84 of FIGS. 9 and 10. However, instead of the actuator 62 moving the housing 36 relative to the supporting structure 44, an internal actuator 62' moves the emitter 38 relative to the housing 36 to achieve the same function and/or operation as the sensor system 84 of FIGS. 9 and 10. In this example, the housing 36 remains substantially stationary, and the actuator 62' moves the emitter 38 between a first position (FIG. 11) and second position (FIG. 12) relative to both the housing 36 and the supporting structure 44. In the illustrated example, the emitter 38 emits a projection 50g along a first path 92 when actuator 62' is at the first position (FIG. 11). In this example, the projection 50g does not detect the presence of (e.g., misses or does not intersect) the person 10. When the actuator 62' moves to the second position (FIG. 12), the emitter 38 emits the projection 50g along a second path 94. In this example, the projection 50g detects the presence of (e.g., is intersected by) the person 10. In turn, intersection of the projection 50g by the person 10 creates the reflection 52 off of the person 10, as shown in FIG. 12. Based on the timing (e.g., a time difference between when the projection 50g is emitted by the emitter 38 and the reflection 52 is received by the receiver 42) and/or other characteristic of the reflection 52, the controller 80 determines whether person 10 is present within the area 12.

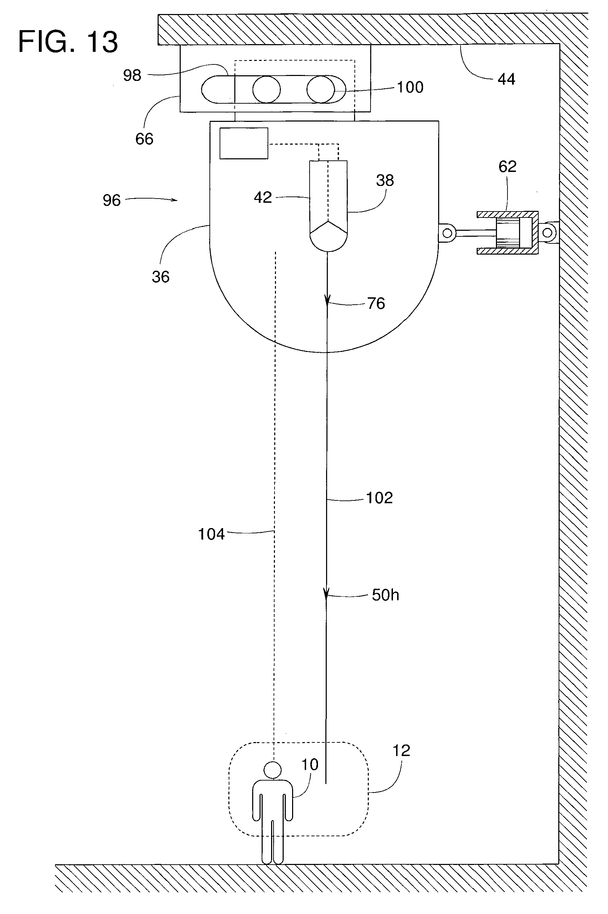

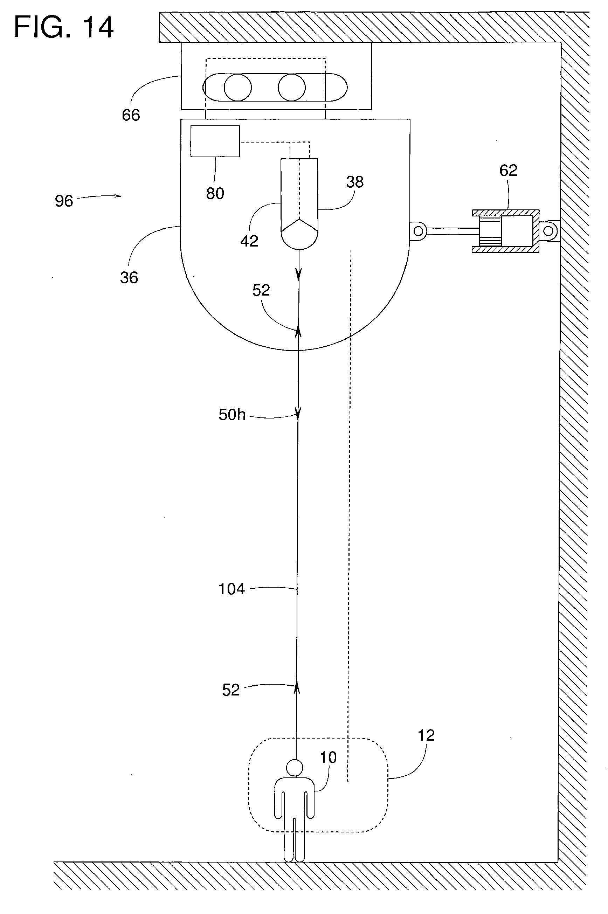

FIGS. 13 and 14 show another example sensor system 96 that is similar to sensor system 84 of FIGS. 9 and 10. However, instead of the pivotal connection 64 shown in the example of FIGS. 9 and 10, the sensor system 96 of the illustrated example includes a sliding, rolling and/or otherwise translating connection 66 that connects or couples the housing 36 to the support structure 44. The translating connection 66 is schematically illustrated having a guide slot 98 to guide the translation or movement of the rollers 100 between a first position (FIG. 13) and a second position (FIG. 14). The guide slot 96 is fixed relative to the support structure 44, and the axes of the rollers 100 are fixed relative to the housing 36. In this example, the initial projection 76 remains substantially fixed relative to the housing 36, and the actuator 62 moves the housing 36 and the emitter 38 in translation between the first position (FIG. 13) and the second position (FIG. 14) relative to the support structure 44. The first position shown in FIG. 13 is horizontally offset relative to the second position shown in FIG. 14. In the illustrated example, when actuator 62 is at the first position (FIG. 13), the emitter 38 emits a projection 50h along a first path 102. In this example, the projection 50h does not detect the presence of (e.g., is not intersected by) the person 10. When the actuator 62 moves to the second position (FIG. 14), the emitter 38 emits the projection 50h along a second path 104. In this example, the second path 104 is laterally or horizontally spaced from the first path 102. In this example, the projection 50h detects the presence of (e.g., is intersected by) the person 10. In turn, the intersection of the projection 50h by the person 10 creates the reflection 52 off of the person 10, as shown in FIG. 14. Based on the timing (e.g., a time difference between when the projection 50h is emitted by the emitter 38 and the reflection 52 is received by the receiver 42) and/or other characteristic of reflection 52, controller 80 determines whether person 10 is within area 12.

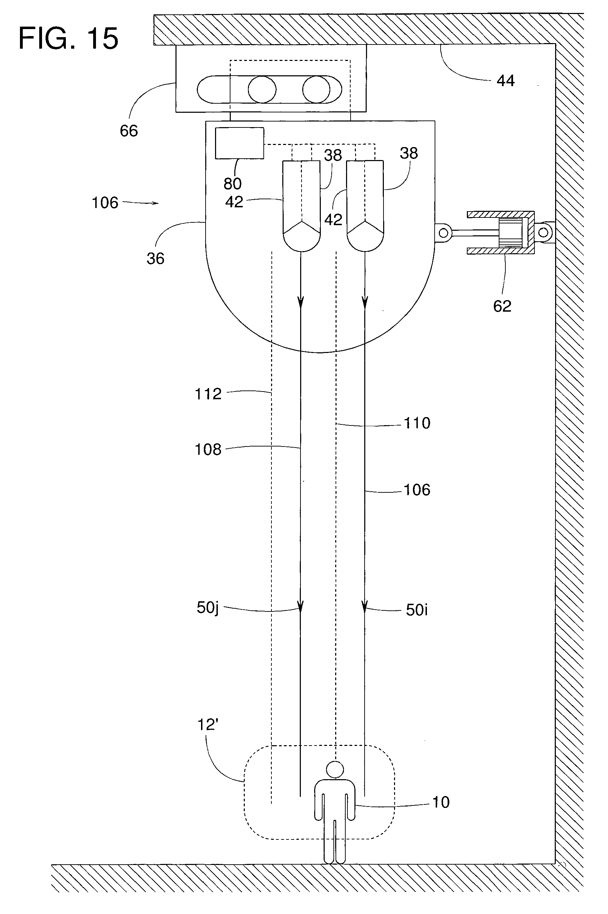

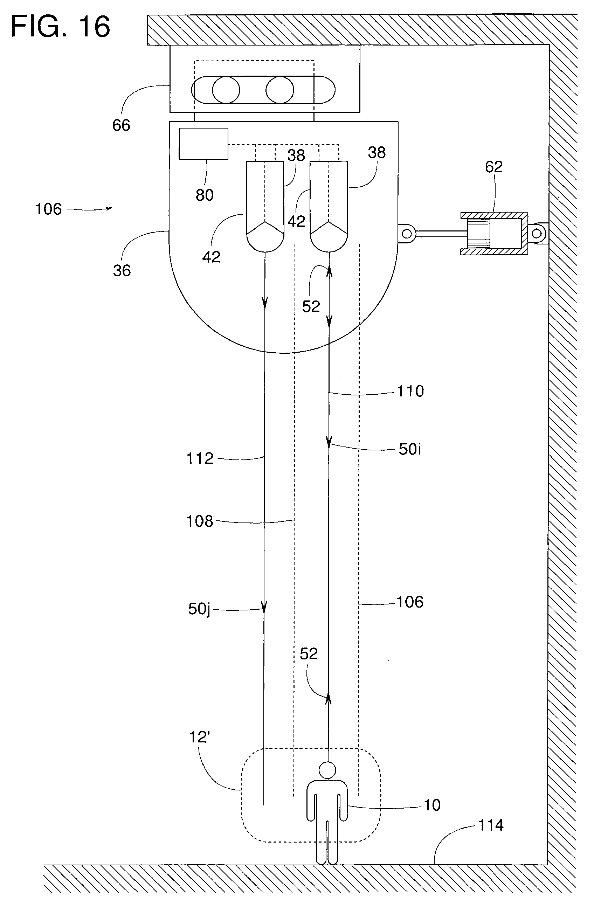

FIGS. 15 and 16 show an example sensor system 106 that is similar to sensor system 96 of FIGS. 13 and 14. However, the sensor system 106 of the illustrated example includes a second emitter 38. The first and second emitters 38 enable the sensor system 106 to cover a predetermined range or area 12' that is broader than the predetermined range or area 12 of the example sensor system 96 of FIGS. 13 and 14. In this example, the actuator 62 moves the housing 36 and the emitters 38 between a first position (FIG. 15) and a second position (FIG. 16). In the illustrated example, when the actuator 62 is at the first position (FIG. 15), the emitters 38 emit projections 50i and 50j along respective paths 196 and 108. In the illustrated example, the projections 50i and 50j do not detect the presence of (e.g., are not intersected by) the person 10. When the actuator 62 moves to the second position (FIG. 16), the emitters 38 emit the projections 50i and 50j along intermediate paths 110 and 112. In this example, the projection 50i along the intermediate path 110 detects the presence (e.g., intersects) the person 10. The intersection of the projection 50i by the person 10 creates the reflection 52 off of the person 10, as shown in FIG. 16. Based on the timing and/or other characteristic of the reflection 52, the controller 80 determines whether the person 10 is present within the area 12'.

In addition or as alternatives to the BEA LZR-microscan, other example emitter/receiver units may be incorporated in the example sensor systems shown in FIGS. 1 - 16. Example of such units include, but are not limited to, ultrasonic sensors such as a model UC4000 Ultrasonic Sensor, microwave sensor units such as models BEA Sparrow or BEA Falcon, laser scanners such as model BEA LZR-microscan, and RL 2000 and/or any other sensor unit.

In some examples, the sensor systems shown in FIGS. 1 - 16 have an adjustable user-defined maximum sensing distance that provides a non-sensing offset distance from certain chosen surfaces such as a driveway 114, snow, and/or other non-obstacles. This prevents such surfaces from falsely triggering the sensor. It also makes the sensor more tolerant of being moved by an actuator without being falsely triggered by such movement.

At least some of the aforementioned examples include one or more features and/or benefits including, but not limited to, the following:

In some examples, a sensor system to detect a presence of a person within a predetermined range of the sensor system includes a housing mountable to a support structure. An emitter is supported by the housing and is to emit a projection. An actuator is coupled to at least one of the housing or the emitter. The actuator is movable selectively to a first position and a second position relative to the support structure. The emitter emits the projection along a first path when the actuator is in the first position and the emitter emits the projection along a second path when the actuator is in the second position. A receiver is supported by the housing and this at a substantially fixed location relative to the emitter. The receiver is located proximate the emitter. The receiver receives a reflection of the projection reflected off of the person when the person is positioned within a line of sight of the projection.

In some examples, at least one of the housing or the emitter moves in response to the actuator moving between the first position and the second position.

In some examples, the housing pivots relative to the support structure in response to the actuator moving between the first position and the second position.

In some examples, the housing translates relative to the support structure in response to the actuator moving between the first position and the second position.

In some examples, the sensor system includes a beam deflector to intersect at least one of the first path or the second path, and a drive unit to move the beam deflector selectively to a first orientation and a second orientation relative to the housing.

In some examples, the housing, the emitter and the beam deflector move in response to the actuator moving between the first position and the second position.

In some examples, the beam deflector includes a movable mirror.

In some examples, the beam deflector includes a movable lens.

In some examples, the projection is a laser beam.

In some examples, the projection is an infrared beam.

In some examples, the sensor system includes a controller communicatively coupled with the emitter and the receiver. The controller determines whether the person is within the predetermined range based on communication with the emitter and the receiver.

In some examples, a sensor system to detect a presence of a person within a predetermined range of the sensor system includes a housing mountable to the support structure. The housing is movable relative to the support structure between a first position, a second position and an intermediate position. The intermediate position is between the first position and the second position. An actuator is coupled to the housing to move the housing between the first position, the second position and the intermediate position. A first projection extends from the housing along a first path when the housing is at the first position. A second projection extends from the housing along a second path when the housing is at the first position. The first projection extends along an intermediate path when the housing is at the intermediate position. The intermediate path is between the first path and the second path. A reflection of at least one of the first projection and the second projection extends from the person toward the housing. A receiver disposed within the housing receives the reflection. The receiver provides a feedback signal in response to receiving the reflection. A controller receives the feedback signal from the receiver. The controller determines whether the person is within the predetermined range based on the feedback signal.

In some examples, the sensor system includes a beam deflector movable within the housing between at least a first orientation and a second orientation. The first projection extends from the beam deflector when the beam deflector is in the first orientation, and the second projection extends from the beam deflector when the beam deflector is in the second orientation.

In some examples, the sensor system includes a drive unit coupled to the beam deflector to move the beam deflector between the first orientation and the second orientation.

In some examples, the housing and the beam deflector move in response to the actuator moving between the first position and the second position.

In some examples, the housing pivots relative to the support structure in response to the actuator moving between the first position and the second position.

In some examples, the housing translates relative to the support structure in response to the actuator moving between the first position and the second position.

In some examples, a sensor system detects a presence of a person within a predetermined range of the sensor system includes a housing mountable to the support structure. An emitter is supported by the housing and emits a projection along an initial path. A beam deflector positioned on the initial path receives the projection. The beam deflector is movable between a first orientation and a second orientation relative to the housing. The beam deflector directs the projection along a first path when the beam deflector is in the first orientation, and the beam deflector directs the projection along a second path when the beam deflector is in the second orientation. A drive unit moves the beam deflector between the first orientation and the second orientation relative to the housing. An actuator is coupled to at least one of the emitter or the housing, the actuator being movable between a first position and a second position relative to the support structure to move the initial path relative to the support structure. The projection is directed along an intermediate path between the first path and the second path in response to the actuator moving between the first position and the second position. A receiver is supported by the housing. The receiver is located proximate the emitter to receive a reflection of the projection when the beam deflector directs the projection along at least one of the first path, the second path or the intermediate path.

In some examples, the beam deflector includes a movable mirror.

In some examples, the beam deflector includes a movable lens.

In some examples, the housing pivots relative to the support structure in response to the actuator moving between the first position and the second position.

In some examples, the housing translates relative to the support structure in response to the actuator moving between the first position and the second position.

In some examples, the housing, the emitter and the beam deflector move in response to the actuator moving between the first position and the second position.

In some examples, the projection is a laser beam.

In some examples, the projection is an infrared beam.

In some examples, the sensor system includes a controller connected in communication with the emitter and the receiver. The controller determines whether the person is within the predetermined range based on communication with the emitter and the receiver.

Although certain example methods, apparatus and articles of manufacture have been described herein, the scope of the coverage of this patent is not limited thereto. On the contrary, this patent covers all methods, apparatus and articles of manufacture fairly falling within the scope of the appended claims either literally or under the doctrine of equivalents.

## Claims

1. A sensor system to detect a presence of a person within a predetermined range of the sensor system, the sensor system comprising:
a housing mountable to a support structure;
an emitter supported by the housing, the emitter to emit a projection;
an actuator coupled to at least one of the housing or the emitter, the actuator being movable selectively to a first position and a second position relative to the support structure, the emitter to emit the projection along a first path when the actuator is in the first position, the emitter to emit the projection along a second path when the actuator is in the second position; and
a receiver to be supported by the housing, the receiver being at a substantially fixed location relative to the emitter, the receiver being located proximate the emitter, the receiver to receive a reflection of the projection reflected off of the person when the person is positioned within a line of sight of the projection.

2. The sensor system of claim 1, wherein at least one of the housing or the emitter moves in response to the actuator moving between the first position and the second position.

3. The sensor system of claim 1, further comprising:
a beam deflector to intersect at least one of the first path or the second path; and
a drive unit to move the beam deflector selectively to a first orientation and a second orientation relative to the housing.

4. The sensor system of claim 1, further comprising a controller communicatively coupled with the emitter and the receiver, the controller to determine whether the person is within the predetermined range based on communication with the emitter and the receiver.

5. A sensor system to detect a presence of a person within a predetermined range of the sensor system, the sensor system comprising:
a housing mountable to the support structure, the housing being movable relative to the support structure between a first position, a second position and an intermediate position, the intermediate position being between the first position and the second position;
an actuator coupled to the housing to move the housing between the first position, the second position and the intermediate position;
a first projection to extend from the housing along a first path when the housing is at the first position;
a second projection to extend from the housing along a second path when the housing is at the first position, the first projection to extend along an intermediate path when the housing is at the intermediate position, the intermediate path being between the first path and the second path;
a reflection of at least one of the first projection and the second projection to extend from the person toward the housing;
a receiver disposed within the housing to receive the reflection, the receiver to provide a feedback signal in response to receiving the reflection; and
a controller to receive the feedback signal from the receiver, the controller to determine whether the person is within the predetermined range based on the feedback signal.

6. The sensor system of claim 5, further comprising a beam deflector movable within the housing between at least a first orientation and a second orientation, the first projection to extend from the beam deflector when the beam deflector is in the first orientation, and the second projection to extend from the beam deflector when the beam deflector is in the second orientation.

7. The sensor system of claim 6, further comprising a drive unit coupled to the beam deflector to move the beam deflector between the first orientation and the second orientation.

8. The sensor system of claim 6, wherein the housing and the beam deflector move in response to the actuator moving between the first position and the second position.

9. A sensor system to detect a presence of a person within a predetermined range of the sensor system, the sensor system comprising:
a housing mountable to the support structure;
an emitter supported by the housing, the emitter to emit a projection along an initial path;
a beam deflector positioned on the initial path to receive the projection, the beam deflector being movable between a first orientation and a second orientation relative to the housing, the beam deflector to direct the projection along a first path when the beam deflector is in the first orientation, the beam deflector to direct the projection along a second path when the beam deflector is in the second orientation;
a drive unit to move the beam deflector between the first orientation and the second orientation relative to the housing;
an actuator coupled to at least one of the emitter or the housing, the actuator being movable between a first position and a second position relative to the support structure to move the initial path relative to the support structure, and the projection being directed along an intermediate path between the first path and the second path in response to the actuator moving between the first position and the second position; and
a receiver supported by the housing, the receiver being located proximate the emitter to receive a reflection of the projection when the beam deflector directs the projection along at least one of the first path, the second path or the intermediate path.

10. The sensor system of claim 3 or 9, wherein the beam deflector includes a movable mirror.

11. The sensor system of claim 3 or 9, wherein the beam deflector includes a movable lens.

12. The sensor system of claim 1, 5 or 9, wherein the housing pivots relative to the support structure in response to the actuator moving between the first position and the second position.

13. The sensor system of claim 1, 5 or 9, wherein the housing translates relative to the support structure in response to the actuator moving between the first position and the second position.

14. The sensor system of claim 3 or 9, wherein the housing, the emitter and the beam deflector move in response to the actuator moving between the first position and the second position.

15. The sensor system of claim 1 or 9, wherein the projection is a laser beam.

16. The sensor system of claim 1 or 9, wherein the projection is an infrared beam.

17. The sensor system of claim 9, further comprising a controller connected in communication with the emitter and the receiver, the controller to determine whether the person is within the predetermined range based on communication with the emitter and the receiver.
